# EUROPEAN PATENT APPLICATION

(11) **EP 0 901 926 A2**
(43) Date of publication of application: **17.03.1999**
(21) Application number: 98203066.0
(22) Date of filing: 11.09.1998
(51) Int. Cl.: B60K 15/04

(54) **Antitheft device for motor vehicle's fuel-tanks**

(30) Priority: 11.09.1997 IT AP970009
(71) Applicant: Voltattorni, Saverio, 63039 S.Benedetto del Tronto (IT)
(72) Inventor: Voltattorni, Saverio, 63039 S.Benedetto del Tronto (IT)
(74) Representative: Baldi, Claudio

(57) **Abstract**

The present invention relates to an anti-theft device for vehicle fuel tanks made up of a cylindrical coupling (1) welded in the tank filler, featuring a threaded upper section (4), a drilled wall and a lower end (5) closed with a conical cover (7).

## Description

The present invention relates to an anti-theft device for vehicle fuel tanks.

So far vehicle tanks have never been fitted with appropriate devices to prevent the fuel from being taken out using an ordinary flexible plastic pipe of suitable diameter and length which is inserted into the tank filler to suck the fuel from the tank bottom.

The only anti-theft devices for fuel tanks that are currently known and used are made up of special caps provided with a lock with key, which are fitted onto the tank filler.

The said caps with key, however, cannot completely prevent the fuel from being stolen, since expert thieves do not find it difficult to tamper o force the lock.

In view of the above, the anti-theft device according to the present invention has been developed to prevent, with absolute certainty, the fuel from being taken out of the tank by means of a flexible plastic suction pipe.

The device according to the invention is made up of a metal cylindrical coupling of suitable diameter that is inserted into the tank filler. The said coupling externally features a collar that is welded inside the filler. In this way the fuel can only be pumped inside the tank through the internal conduct of the coupling, which features a threaded upper end used to screw the tank cap.

The coupling section from the collar to the lower end is covered by a dense series of small holes, having a diameter of few millimeters, while the lower part of this drilled section is closed with a conical cover, whose vertex is pointed towards the threaded end of the coupling.

For a clearer explication, the description of the anti-theft device according to the invention continues with reference to the enclosed drawing, which only has an explanatory, not restrictive purpose, in which:

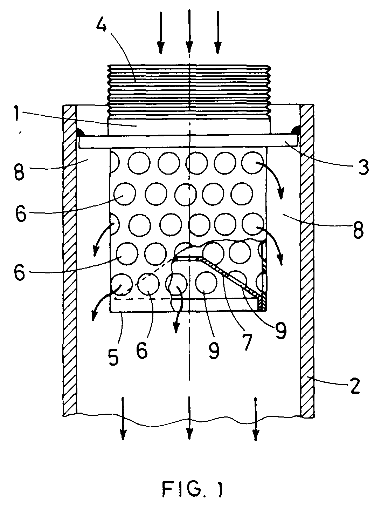

- fig. 1 shows the anti-theft device welded inside the tank filler (the drawing also includes a short section of the tank filler).

With reference to fig. 1, the device comprises a cylindrical coupling (1) of suitable diameter that is inserted inside the tank filler (2).

The said coupling (1) externally features a collar (3) that is welded on the internal wall of the filler (2).

The coupling (1) features a threaded upper end (4) used to screw the tank cap.

The section of the coupling (1) from the collar (3) to the lower end (5) of the coupling is covered by a dense series of small holes (6) having a diameter of few millimeters, while the end (5) is closed with a conical cover (7) whose vertex is pointed towards the upper end (4) of the coupling (1).

When filling the tank, the fuel pumped into the coupling (1) flows through the holes (6) of the drilled wall of the coupling into the annular interspace (8) existing between the external wall of the coupling (1) and the internal wall of the filler (2); from this interspace (8) the fuel freely flows into the inside of the tank.

The purpose of conical shape of the cover (7) is to break the flow of the fuel and allow for pumping it under pressure into the coupling (1) with no risk of vortex and turbulence that could cause the fuel to flow back and spill out of the coupling (1).

In the preferably applied embodiment of the invention shown in fig. 1, the wall of the conical cover (7) also features a dense series of small holes (9) that let the fuel pass when filling the tank.

On the other hand, the fact that the holes (9) are drilled on a conical surface makes it extremely difficult to insert the suction pipes used to take the fuel out of the tank through the said holes (9).

The holes (6 and 9) preferably have a diameter of 10 mm.

## Claims

1. Anti-theft device for vehicle fuel tanks comprising a cylindrical coupling (1) externally featuring a collar (3) and a threaded upper end (4), being the section of the coupling (1) from the collar (3) to the lower end (5) of the coupling covered by a dense series of small holes (6), while the end (5) of the coupling (1) is closed with a conical cover (7) whose vertex is pointed towards the upper end (4) of the coupling (1).

2. Anti-theft device for vehicle fuel tanks according to claim 1, characterized in that the wall of the conical cover (7) features a dense series of small holes (9).

3. Anti-theft device for vehicle fuel tanks according to the previous claims, characterized in that the holes (6 and 9) have a diameter of 10 mm.
